(19)

**Europäisches Patentamt**
**European Patent Office**
**Office européen des brevets**

(11) **EP 4 657 332 A1**

(12) **EUROPEAN PATENT APPLICATION**

(43) Date of publication:
**03.12.2025 Bulletin 2025/49**

(21) Application number: **25179750.2**

(22) Date of filing: **29.05.2025**

(51) International Patent Classification (IPC):
**G06N 10/40** $^{(2022.01)}$ **G06N 10/70** $^{(2022.01)}$

(52) Cooperative Patent Classification (CPC):
**G06N 10/40; B82Y 10/00; G06N 10/70; H04B 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **29.05.2024 US 202463652779 P**

(71) Applicant: **Xanadu Quantum Technologies Inc.**
**Toronto, Ontario M5G 2C8 (CA)**

(72) Inventors:
- **Bourassa, Joseph**
  **Ontario, M4J 1C4 (CA)**
- **Arciniegas, Carlos**
  **Ontario, M4M 3E9 (CA)**
- **Alexander, Rafael**
  **Ontario, M2N 1T1 (CA)**
- **Tzitrin, Ilan**
  **Ontario, M5A 4L1 (CA)**

(74) Representative: **Cameron Intellectual Property Ltd**
**Moncrieff House**
**69 West Nile Street**
**Glasgow G1 2QB (GB)**

(54) **QPU MULTIPLEXING**

(57)    A method for routing optical signals in a quantum computing system. A plurality of optical signals can be routed to one or more quantum processing units. A plurality of multiplexers are arranged at the input to each quantum processing unit. The multiplexers can be controlled to route optical signals with desired signal characteristics for quantum computation using the quantum processing unit. This can increase the likelihood of preferred resource states (e.g., non-Gaussian states) being available for quantum computation.

EP 4 657 332 A1

## Description

### FIELD

This document relates generally to quantum optical circuits, and in particular to optical circuits for selecting resource states for a quantum processing unit.

### BACKGROUND

The following is not an admission that anything discussed below is part of the prior art or part of the common general knowledge of a person skilled in the art.

Quantum computing is a type of computation whose operations can leverage quantum mechanical effects, such as superposition, interference, and entanglement. Devices that perform quantum computations are known as quantum computers. Most quantum computing models are based on the quantum bit, or "qubit." Quantum computing models may rely on the probabilistic generation of desired quantum states to enable quantum computations. Increasing the probability of generating a desired quantum state is thus desirable for many applications.

### SUMMARY

The following introduction is provided to introduce the reader to the more detailed discussion to follow. The introduction is not intended to limit or define any claimed or as yet unclaimed invention. One or more inventions may reside in any combination or sub-combination of the elements or process steps disclosed in any part of this document including its claims and figures.

In accordance with an aspect of this disclosure, there is provided a method for selecting and/or routing optical signals in a quantum computing system. A plurality of optical signals can be routed to (or selected to be routed to) one or more quantum processing units. A plurality of multiplexers are arranged at the input to each quantum processing unit. The multiplexers can be controlled to select and route optical signals with desired signal characteristics for quantum computation using the quantum processing unit. This can increase the likelihood of preferred resource states (e.g., non-Gaussian states) being available for quantum computation.

In accordance with this aspect, there is provided a method comprising: receiving a plurality of first optical signals at a plurality of first optical multiplexers arranged at the input to a first quantum processing unit, wherein each first optical signal is a portion of an entangled signal set; and generating a first qubit graph state by: determining a desired set of first optical signals from the plurality of first optical signals ; and generating a first macronode graph by entangling the desired set of first optical signals.

The desired set of first optical signals can be determined using at least one signal quality metric for each first optical signal.

The at least one signal quality metric for each first optical signal can be determined based on a homodyne measurement of a previously entangled mode that was previously entangled with a first mode of that first optical signal.

The signal quality metric for each first optical signal can be determined based on a photon-number resolving measurement of a previously entangled mode that was previously entangled with a first mode of that first optical signal.

The entangled signal set can be one of a plurality of entangled signal sets and selecting the desired set of first optical signals can include determining a plurality of set quality metrics by, for each entangled signal set in the plurality of entangled signal sets, determining a corresponding set quality metric and selecting the desired set of first optical signals based on the plurality of set quality metrics.

The plurality of first optical multiplexers and the first quantum processing unit can be provided on the same chip.

For each first optical signal, the corresponding entangled signal set can include that first optical signal and at least one additional optical signal; and each additional optical signal in a given entangled signal set can be received by an additional optical multiplexer that is arranged at the input to an additional quantum processing unit.

For each first optical signal in the desired set of first optical signals, each additional optical signal in the entangled signal set corresponding to that first optical signal can also be identified as part of a desired set of additional optical signals for the additional quantum processing unit.

Each optical multiplexer can include a plurality of fast switches arranged into a binary tree network.

Each entangled signal set can define a Gottesman-Kitaev-Preskill (GKP) Bell pair.

The plurality of first optical signals can be received from a GKP state factory.

The desired set of first optical signals can be determined to include at least one first optical signal with a squeezed optical state.

The desired set of first optical signals can be determined to include at least one entangled signal set defining a squeezed state pair.

Determining the desired set of first optical signals can include omitting any GKP states in the plurality of first optical signals having an associated state quality below a desired signal quality threshold.

The method can include measuring one or more qubits in the first qubit graph state using a homodyne detector.

In accordance with an aspect of this disclosure, there is also provided a system comprising: a plurality of first optical multiplexers arranged at the input to a first quantum processing unit to receive a plurality of first optical signals, wherein each first optical signal is a portion of an entangled signal set; and a controller, wherein the controller is configured to: determine a desired set of first optical signals from the plurality of first optical signals ; and control the operation of the plurality of first optical multiplexers to route the desired set of first optical signals to a first optical stitcher configured to entangle the desired set of first optical signals into a first macronode graph to generate a first qubit graph state.

The controller can be configured to determine the desired set of first optical signals using at least one signal quality metric for each first optical signal.

The controller can be configured to determine the at least one signal quality metric for each first optical signal based on a homodyne measurement of a previously entangled mode that was previously entangled with a first mode of that first optical signal.

The controller can be configured to determine the signal quality metric for each first optical signal based on a photon-number resolving measurement of a previously entangled mode that was previously entangled with a first mode of that first optical signal.

The entangled signal set can be one of a plurality of entangled signal sets and the controller can be configured to determine the desired set of first optical signals by determining a plurality of set quality metrics by, for each entangled signal set of the plurality of entangled signal sets, determining a corresponding set quality metric and determining the desired set of first optical signals based on the plurality of set quality metrics.

The plurality of first optical multiplexers and the first quantum processing unit can be provided on the same chip.

The system can include at least one additional quantum processing unit; and for each additional quantum processing unit, a plurality of additional optical multiplexers can be arranged at an input to that additional quantum processing unit; for each first optical signal, the corresponding entangled signal set can include that first optical signal and at least one additional optical signal; and each additional optical signal in a given entangled signal set can be received by one of the additional optical multiplexers arranged at the input to one of the additional quantum processing units.

The controller can be configured to: for each additional quantum processing unit, determine a corresponding desired set of additional optical signals such that for each first optical signal in the desired set of first optical signals, each additional optical signal in the entangled signal set corresponding to that first optical signal is also identified as part of one of the desired sets of additional optical signals.

Each entangled signal set can define a Gottesman-Kitaev-Preskill (GKP) Bell pair.

The plurality of first optical signals can be received from a GKP state factory optically coupled to the plurality of first optical multiplexers.

The system can include the GKP state factory.

The system can include the first optical stitcher arranged to entangle the desired set of first optical signals into the first macronode graph.

Each optical multiplexer can include a plurality of fast switches arranged into a binary tree network.

The controller can be operable to determine the desired set of first optical signals to include at least one first optical signal with a squeezed optical state.

The controller can be operable to determine the desired set of first optical signals to include at least one entangled signal set that defines a squeezed state pair.

The controller can be operable to determine the desired set of first optical signals to omit any GKP states in the plurality of first optical signals having an associated state quality below a desired signal quality threshold.

The system can include one or more QPU homodyne detectors; and the controller can be configured to measure one or more qubits in the first qubit graph state using the one or more QPU homodyne detectors.

In accordance with an aspect of this disclosure, there is provided a method comprising: receiving a plurality of first optical signals, wherein each first optical signal is a portion of an entangled signal set; determining a desired set of first optical signals from the plurality of first optical signals; and routing the first optical signals in the desired set of first optical signals to a stitcher.

The method can include generating a qubit graph state by entangling the first optical signals in the desired set of first optical signals.

The method can include measuring one or more qubits in the qubit graph state using a homodyne detector.

It will be appreciated by a person skilled in the art that an apparatus, system, or method disclosed herein may embody any one or more of the features contained herein and that the features may be used in any particular combination or sub-combination.

These and other aspects and features of various examples will be described in greater detail below.

## BRIEF DESCRIPTION OF THE DRAWINGS

The drawings included herewith are for illustrating various examples of articles, methods, and apparatuses of the present specification and are not intended to limit the scope of what is taught in any way. In the drawings:

FIG. 1 is a block diagram of an example quantum computing system;

FIG. 2A is a block diagram of an example quantum processing unit including a plurality of optical multiplexers that may be used in the example system of FIG. 1;

FIG. 2B is a diagram illustrating an example operational configuration of an optical multiplexer that can be used by the example quantum processing unit of FIG. 2A;

FIG. 2C is a diagram illustrating an example operational configuration of a stitcher that can be used by the example quantum processing unit of FIG. 2A;

FIG. 3 is a block diagram of an example set of quantum processing units including optical multiplexers that may be used in the example system of FIG. 1;

FIG. 4 is a flowchart illustrating an example method of generating a qubit graph state;

FIG. 5A is a plot illustrating the distribution of symmetric effective squeezing of optical states provided to a quantum processing unit by various configurations of an example quantum computing system such as the system shown in FIG. 1; and

FIG. 5B is a plot illustrating the distribution of symmetric effective squeezing for the average optical state provided to a quantum processing unit by various configurations of an example quantum computing system such as the system shown in FIG. 1.

## DETAILED DESCRIPTION

Various apparatuses or processes or compositions will be described below to provide an example of the claimed subject matter. No example described below limits any claim and any claim may cover processes or apparatuses or compositions that differ from those described below. The claims are not limited to apparatuses or processes or compositions having all of the features of any one apparatus or process or composition described below or to features common to multiple or all of the apparatuses or processes or compositions described below. It is possible that an apparatus or process or composition described below is not an example of any exclusive right granted by issuance of this patent application. Any subject matter described below and for which an exclusive right is not granted by issuance of this patent application may be the subject matter of another protective instrument, for example, a continuing patent application, and the applicants, inventors, or owners do not intend to abandon, disclaim, or dedicate to the public any such subject matter by its disclosure in this document.

For simplicity and clarity of illustration, reference numerals may be repeated among the figures to indicate corresponding or analogous elements. In addition, numerous specific details are set forth in order to provide a thorough understanding of the subject matter described herein. However, it will be understood by those of ordinary skill in the art that the subject matter described herein may be practiced without these specific details. In other instances, well-known methods, procedures, and components have not been described in detail so as not to obscure the subject matter described herein. The description is not to be considered as limiting the scope of the subject matter described herein.

The terms "coupled" or "coupling" as used herein can have several different meanings depending on the context in which these terms are used. For example, the terms coupled or coupling can have a mechanical, electrical, or communicative connotation. For example, as used herein, the terms coupled or coupling can indicate that two elements or devices can be directly connected to one another or connected to one another through one or more intermediate elements or devices via an electrical element, electrical signal, or a mechanical element depending on the particular context. Furthermore, the term "communicative coupling" may be used to indicate that an element or device can electrically, optically, or wirelessly send data to another element or device as well as receive data from another element or device.

As used herein, the wording "and/or" is intended to represent an inclusive- or. That is, "X and/or Y" is intended to mean X or Y or both, for example. As a further example, "X, Y, and/or Z" is intended to mean X or Y or Z or any combination thereof.

Terms of degree such as "substantially", "about", and "approximately" as used herein mean a reasonable amount of deviation of the modified term such that the end result is not significantly changed. These terms of degree may also be construed as including a deviation of the modified term if this deviation would not negate the meaning of the term it modifies.

Any recitation of numerical ranges by endpoints herein includes all numbers and fractions subsumed within that range (e.g., 1 to 5 includes 1, 1.5, 2, 2.75, 3, 3.90, 4, and 5). It is also to be understood that all numbers and fractions thereof are presumed to be modified by the term "about" which means a variation of up to a certain amount of the number to which reference is being made if the end result is not significantly changed.

The present disclosure relates to systems and methods for generating multi-mode states for use in photonic quantum computing. The generation of optical resource states desirable for use in photonic quantum computing is often a probabilistic, rather than deterministic, process. Increasing the probability of generating desired resource states can improve the fault tolerance of photonic quantum computers.

The present disclosure relates to systems and methods for generating desired optical resource states in which optical multiplexers are provided at the input to a quantum processing unit (QPU). Providing optical multiplexers at the inputs to the QPUs can ensure that higher-quality optical signals are used to generate qubit graph states used for quantum computation. The optical multiplexers can be configured to select desired optical signals to be entangled based on the properties (e.g. signal state, one or more signal quality metrics etc.) of the optical signals received by the optical multiplexers.

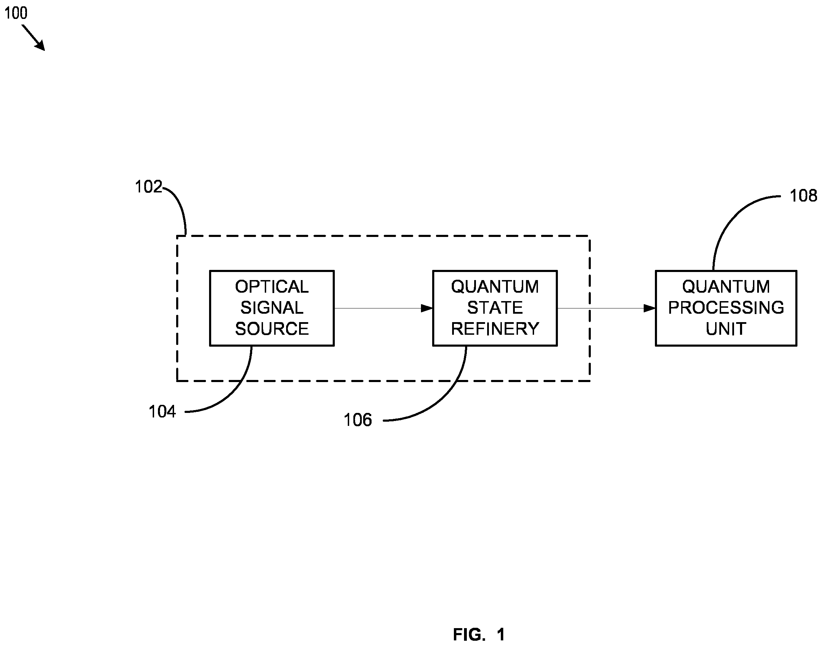

Referring now to FIG. 1, shown therein is a block diagram illustrating an example quantum computing system 100. System 100 is an example of a photonic quantum computing system in which optical signals are directed through a series of optical circuits to generate optical resource states useful for quantum computation. These resource states are then used to generate a qubit graph state (also referred to as a cluster state). Computation can be performed by measuring the qubits in the graph state and decoding the measured values.

As shown in FIG. 1, the quantum computing system 100 includes an optical state factory 102 and a quantum processing unit 108. The optical state factory 102 generally includes optical circuits arranged to generate optical signals (i.e., resource states) that can be provided to the quantum processing unit 108. As shown in the example of FIG. 1, the state factory 102 includes an optical signal source 104 and a quantum state refinery 106 usable to generate the resource states for the QPU 108. The quantum processing unit 108 can entangle the received optical signals into a qubit graph state and measure qubits of the resultant graph state. These measurements can be used to perform measurement-based quantum computation, and the measurement data can be decoded to inform subsequent iterations of measurements and/or to determine the result of a computation being performed by the QPU 108.

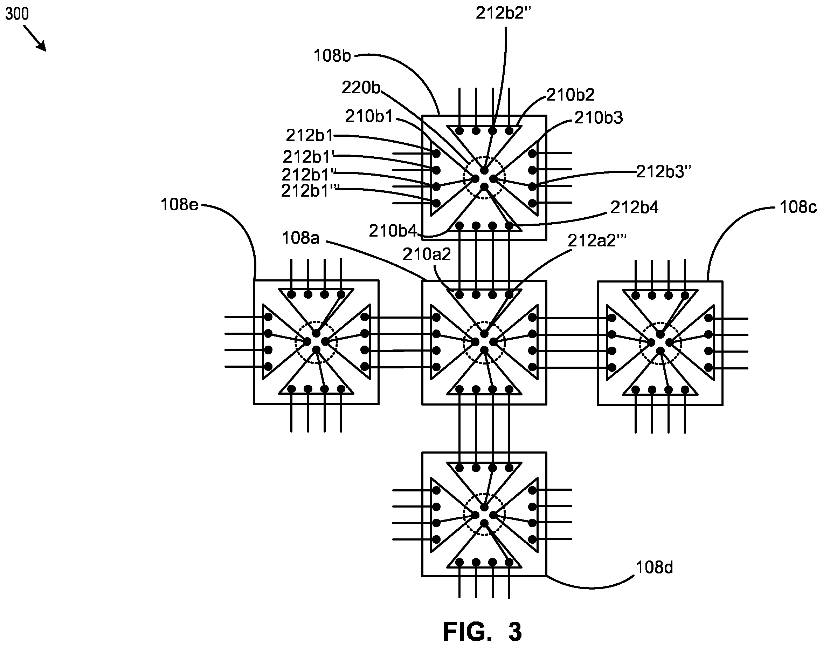

Although only a single quantum processing unit 108 is shown in system 100, it should be understood that quantum computing system 100 can include a plurality of quantum processing units 108 (e.g., as shown in FIG. 3) downstream from the state factory 102. Similarly, although a single state factory 102 is shown, it should be understood that the operations of the state factory 102 may be performed by multiple optical signal sources 104 and/or state refineries 106 operating in parallel to generate the desired number of optical signals for the QPU(s) 108.

Each of the state factory 102, the optical signal source 104, the state refinery 106, and the QPU 108 represents logical functionality that can be implemented using hardware, software, or a combination thereof.

The optical signal source 104 can include one or more Gaussian boson sampling (GBS) sources (also referred to as GBS devices). The GBS sources can be used to prepare non-Gaussian states for use by the QPU 108. The optical signal source 104 can also include other types of optical sources, such as squeezers for example.

A GBS source can include an interferometer (e.g., a network of beamsplitters and phase shifters). The interferometer can be positioned to receive, and interfere, a plurality of displaced squeezed optical states (e.g., $N$ squeezed optical states) in different spatial modes in order to generate a multi-mode state. A subset of the modes (e.g., all but one of the modes or $N - 1$ modes) can then be measured using photon-number-resolving detectors (PNRs). Additional details regarding GBS sources can be found, by way of example only, in "Blueprint for a scalable photonic fault-tolerant quantum computer," J.E. Bourassa et al., Quantum, 5:392 (2021) ("Bourassa"), the entire contents of which are incorporated by reference herein for all purposes.

The output from a GBS source is an optical signal in a non-Gaussian state that can be used as a resource state for GKP-based quantum computation. While the present disclosure describes the generation of various quantum optical states (e.g., GKP states, Bell pairs), it should be understood that references herein to generating quantum optical states generally involves the generation of approximate optical states. The properties of the optical signals generated by the state factory can indicate how closely those optical signals approximate the ideal form of the respective optical state and thus how well they can be used to perform quantum computations.

The number of photons detected by each PNR measurement (of other modes previously entangled with the optical signal) can indicate the properties of a corresponding non-Gaussian state output from the GBS source.

The photon-number resolving measurements can herald the characteristics of optical signals output from the optical signal source 104 (based on a photon-number resolving measurement of an optical mode that was previously entangled with a mode of that optical signal). The heralding data can be evaluated to determine the properties/characteristics (e.g. optical signal state) and quality of optical signals received by the state refinery 106 and/or QPU 108. Routing of those optical signals in the refinery 106 and/or QPU 108 can then be determined based on the characteristics and/or quality of the respective signals (e.g., the PNR measurement data can be used in a control algorithm for one or more multiplexers and/or switches that determine the downstream routing of the optical signal).

For example, a control signal can be defined to flag the existence of a particular state in a related optical signal so that the related optical signal can be correctly routed for subsequent manipulation or measurement. The control signal may identify whether the related optical signal has the correct signal properties (e.g., a desired pattern of photons in specified optical modes) for further processing or whether the signal properties indicates that the related optical signal should be re-routed or even discarded (e.g., when a desired pattern of photons is not present).

While GBS sources can directly produce a number of useful resource states (e.g., squeezed cat states, 3-peak states, GKP states, etc.), the generation of non-Gaussian optical states by GBS sources is non-deterministic. In particular, the probability of directly producing high-quality GKP states is quite low. Accordingly, the state factory 102 can be configured to increase the likelihood of generating a desired resource state (e.g., a high-quality GKP state).

Multiple GBS sources can be arranged in parallel in the optical signal source 104 to boost the probability of a GKP state being generated. The state refinery 106 can include controllable optical circuits usable to selectively route the optical signals from the signal source 104 based on the characteristics of the received optical signals (e.g., as determined from the PNR measurements of related signals). This can increase the likelihood of a high-quality GKP state being provided to the QPU 108 for use in quantum computation.

The refinery 106 can include one or more optical multiplexers arranged to receive outputs from the optical signal source 104. The multiplexers can be controlled to select the optical states with the most favorable properties for further state refinement and/or to be passed to the quantum processing unit 108. Multiplexing probabilistic non-Gaussian state sources can boost the probability of generating a desired quantum state to as close to unity as needed at the cost of increasing the overhead of the state generation process.

For example, a network of reconfigurable beamsplitters can be used to multiplex optical signals received from the optical signal source 104 that are heralded based on PNR measurements performed at the optical signal source 104. Non-selected optical states may be discarded or routed for other measurements.

While non-Gaussian states are produced non-deterministically, single-peak/squeezed states can be produced deterministically. Accordingly, the state factory 102 can generate deterministic optical resource states as needed for the operation of the quantum computing system 100, e.g., by including squeezers (e.g., using microring resonators) in the optical signal source 104.

Optionally, squeezed states can be used by the refinery 106 or QPU 108 in place of GKP states where the GKP states generated by the GBS sources are of insufficient quality (or in insufficient numbers of sufficient quality). The state refinery 106 can be configured to control a multiplexer to replace a GKP state with a squeezed state, which can be produced deterministically, in the event that all of the GBS sources attached to the given multiplexer do not provide a desired GKP state. Some or all of the multiplexers in the refinery 106 can be arranged to receive optical signals from several GBS sources and at least one squeezed state. If the multiplexer receives heralding data that indicates that at least one GBS source has provided a finite-energy GKP state of sufficient quality, then that state (or the most desirable GKP state) can be output. Otherwise, the squeezed state can be output (e.g., where no GKP states are provided or only GKP states of insufficient quality).

The refinery 106 can also include optical circuits configured to generate GKP states through methods other than direct GKP state generation. For example, the refinery 106 can include a breeding circuit that uses the states from the GBS sources (or the states from the GBS sources selected by the multiplexing circuit) to generate GKP states. The breeding circuit can include optical elements arranged to entangle various input states (e.g., using beamsplitters) and perform homodyne measurements on the states in order to produce GKP states.

While breeding circuits can enable near-deterministic generation of GKP states, the quality of the GKP states generated can vary depending on the outcomes of the homodyne detections in the breeding circuit and the PNR measurements from the GBS sources that are fed into the refinery 106. Accordingly, the optical signals output by the state refinery 106 may still not be of sufficient quality to be used in performing computations at the QPU 108.

The quantum processing unit 108 can receive optical signals from the state factory 102. The received optical signals can be stitched at the QPU 108 to generate a qubit graph state. The qubits of the graph state can then be measured at the QPU 108 using homodyne detectors and the measurement outcomes decoded.

The optical signal source 104 and multiplexing circuits can provide a steady supply of optical signals that are approximate GKP states and/or squeezed states of light. These output states can be routed to a stitching component (e.g., a network of beamsplitters) arranged to interfere these optical states in a network of static 50:50 beamsplitters with phase delays. The optical states, after being interfered, can then be routed to a series of homodyne detectors, the results of which can be processed for decoding in a QPU 108.

The state refinery 106 and QPU 108 can both include stitching components. The state refinery 106 can include, for example, subcomponents that interfere states at beamsplitters. The QPU 108 also interferes states at beamsplitters.

Thus, elements of the stitching components may be considered as part of the state refinery 106 and may reside on the same chip as the multiplexing and optional breeding circuits.

The optical signals in GKP states generated by the state factory 102 can be routed through a time stitch circuit which implements delay line loops and chains qubits together as they are received. Outputs from the time stitch circuit can be provided to a space stitcher that is configured to entangle the outputs from the time stitch, in the spatial domain, to produce multi-dimensional resource states.

The QPU 108 can be controlled by a QPU controller to entangle the resource states from the state factory 102 into a higher-dimensional cluster state (the qubit graph state) that includes states for fault-tolerant quantum computation. The QPU controller can receive quadrature readouts via homodyne measurements from the QPU 108, and can send local oscillator phase updates to the QPU 108 (e.g., to define or set which quadrature the homodyne detector is to measure). The QPU controller can also receive instructions associated with a program (e.g., instructions defining the computation to be performed, and/or how to decode the quadrature readouts from the QPU 108), and can output results.

The QPU controller can be implemented using one or more processors such as a specialized or general purpose microprocessor. The processor(s) control the operation of the QPU 108 and in general can include any suitable processor such as a microprocessor, controller, digital signal processor, field-programmable gate array, application-specific integrated circuit, microcontroller, or other suitable computer processor that can provide sufficient processing power, depending on the desired configuration, purposes, and requirements of the system 100.

The QPU 108 can include the processor, a power supply, memory, and a communication module operatively coupled to the processor and to the system 100. The memory can include RAM, ROM, one or more hard drives, one or more flash drives or some other suitable data storage elements such as disk drives, etc. Optionally, the QPU 108 can be operatively coupled to at least one input device (e.g., a pushbutton keyboard, mouse, touchscreen, and the like), and at least one output device (e.g., a display screen).

Optionally, a graph or cluster state can be generated by distributing GKP Bell pairs (i.e., the individual optical signals in an entangled signal set that defines a GKP Bell pair) to different quantum processing units (QPUs) 108 where the cluster state is stitched, and a computation is performed. FIG. 3 illustrates an example of a set of QPUs 108a-108e where the individual optical signals from entangled signal sets are distributed to different QPUs 108. While the examples shown herein relate to 2-mode entangled GKP states, the disclosed architecture and processes can be generalized to the generation of n-mode entangled GKP states that combine with other such states in a QPU, where a stitching operation is performed that effects a qubit-level computation or some other protocol requiring multipartite entanglement.

As noted above, however, the resource states from the state factory 102 are generated probabilistically. To accommodate probabilistic sources of entangled states and increase the fault tolerance of the quantum computing system 100, each QPU 108 can be provided with a plurality of optical multiplexers (referred to herein as QPU multiplexers). The QPU multiplexers can be provided at the input to each QPU 108. The QPU multiplexers can be controlled to selectively route the optical signals (resource states) from the state factory 102 to the stitcher used to generate the cluster state. This can further increase the likelihood of having a desired resource state to generate the qubit graph state. The QPU multiplexers can selectively route the optical signals from the state factory 102 based on the properties of the optical signals (e.g. signal state, signal quality metric(s)). The properties of the optical signals may be determined based on measurements of related optical signals (e.g. a homodyne measurement or PNR measurement of a previously entangled mode).

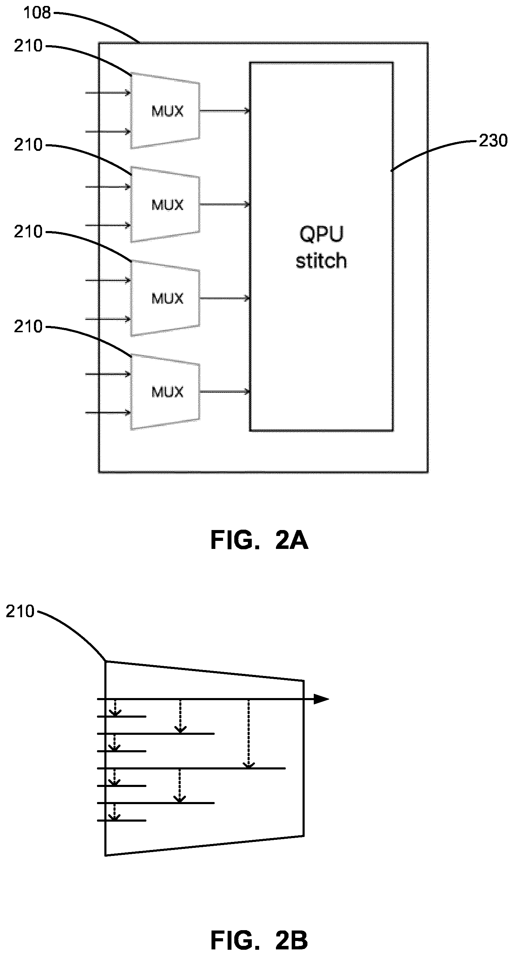

Referring now to FIG. 2A, shown therein is an example of a quantum processing unit 108. The example QPU 108 shown in FIG. 2A can be used in a quantum processing system such as system 100 described herein above. As shown in FIG. 2A, the QPU 108 includes a plurality of optical multiplexers 210. The optical multiplexers 210 are arranged at the input to the QPU 108-that is, optical multiplexers 210 are arranged to receive incoming optical states being transmitted to the QPU 108 from a state factory 102.

Each optical multiplexer 210 can receive a plurality of optical signals from the state factory 102. The controller of the QPU 108 can also receive heralding data related to the received optical signals (e.g., PNR measurements from optical signal source 104 and/or homodyne detector data from the refinery 106). The heralding data can indicate the properties of the received optical signals such as the signal state and optionally signal quality metrics. The multiplexers 210 can be controlled based on the heralding data to identify a desired set of incoming optical signals to be routed to the stitcher 230. The desired set of incoming optical signals can then be stitched to generate the qubit graph state.

The heralding data can indicate that the corresponding optical signal is in a more desirable state for quantum computation. For instance, certain combinations of PNR measurement data and homodyne measurement data correspond to better resource states. In the case of GKP states, those with a larger number of narrower peaks can be considered to be of higher quality compared to GKP states with a smaller number of wider peaks. In some example state factory configurations, high-valued even-parity PNR outcomes and homodyne outcomes close to zero may be indicative of higher quality GKP states.

Including multiplexers 210 in the QPU 108 allows low-quality optical signals to be replaced by higher-quality optical signals. For example, low-quality GKP states can be discarded after breeding and replaced with high-quality squeezed states (e.g., produced by the refinery 106), squeezed dumbbells (e.g., produced by the QPU 108), or outputs of other state factories (effectively gaining a round of MUX post breeding). As used herein, a "squeezed dumbbell" refers to a squeezed state Bell pair.

The QPU controller can determine the type of signal to provide to the stitcher 230 based on the heralding data from the state factory 102. The QPU controller can determine the properties (e.g. signal state, signal quality metric) of the received optical signals based on the heralding data. The QPU controller can then select which of the received optical signals are to be entangled based on the determined signal properties. For example, the QPU controller may select received optical signals having preferred optical states (e.g. GKP states) to be entangled.

Optionally, one or more signal quality metrics for each received optical signal can be determined using the heralding data. The signal quality metrics can be used to determine the set of optical signals to be entangled. In some cases, this may allow high-quality optical signals of typically less desirable states (e.g. squeezed states) to replace low-quality optical signals of more desirable states (e.g. GKP states).

The optical signals from the state factory 102 generate resource states with a distribution of outcomes in the PNR measurements in the signal source 104 and homodyne measurements in the state refinery 106. It would be overly stringent to require that the average state of the distribution of states from the state factory 102 has a high-quality signal metric, such as a symmetric effective squeezing above 9.75 dB (i.e., to operate the state factory in a deterministic way without any multiplexers in the QPU). Including multiplexers in the QPU 108 allows the constraints on the state factory 102 to be reduced (e.g., ensuring there is a reasonable probability (~50%) of generating a desired resource state) while increasing the overall probability of a desired resource state being used to generate the qubit graph state.

If the optical signals output by the state factory 102 do not have an average state with the minimum required quality (quantified via a figure of merit such as symmetric effective squeezing), the multiplexers 210 in the QPU 108 can select higher-quality resource states for the stitcher 230 and thereby boost the average state quality (e.g., the symmetric effective squeezing of the average state).

Although FIG. 2A shows only a single stage of optical multiplexers, it should be understood that the QPU 108 can include two or more stages of optical multiplexers and/or optical multiplexers that accept a greater or lesser number of potential resource states to be provided to the stitcher 230. Similarly, although the example shown in FIG. 2A relates to generating a macronode with 4 modes, it should be understood that a different number of modes (and thus a different number of multiplexed outputs) can be used to generate a qubit graph state.

In general, optical multiplexers can be configured using controllable optical components that can receive a plurality of potential resource states and selectively pass along a desired subset of the potential resource states based on data associated with the plurality of potential resource states. The remaining potential resource states can be discarded or may be routed for other measurement or processing other than by the stitcher 230. The components of the optical multiplexer must be adjustable/reconfigurable from shot-to-shot (within each clock cycle) of the quantum computing system 100. A suitable delay must also be provided from when the heralding data of the potential resource states are received by the QPU controller to when the potential resource states arrive at the multiplexer, so that the QPU controller can evaluate the potential resource states and control the multiplexer circuit to route the desired resource states to the stitcher 230. This may require a delay line for the incoming potential resource states.

Referring now to FIG. 2B, shown therein is a block diagram illustrating an example of a multiplexing method that may be implemented by the optical multiplexers 210. In the example shown in FIG. 2B, the optical multiplexer 210 is configured as a binary tree multiplexer. The inventors have found that an optical multiplexer with a binary tree of fast switches provided for good scaling in the QPU 108.

The example optical multiplexer 210 includes a plurality of fast switches arranged into a binary tree network. The switches can be controlled to selectively route the desired optical signals received at the input to the QPU 108 to the stitching components 230 of the QPU 108. Each fast switch can operate to either swap two potential resource states or transmit them unchanged depending on the control signal provided to that switch. For N inputs, the multiplexer 210 can be provided using a fast switch depth of $\log_2(N)$. Due to the symmetry of the binary tree, every potential resource states passes through the same number of components (logarithmic in the number of input states).

Optionally, each fast switch may be implemented using a Mach-Zehnder interferometer (MZI). An MZI includes a directional coupler followed by fast phase shifters and then another directional coupler.

While FIG. 2B shows an example of a binary tree multiplexer, it should be understood that various other types of optical multiplexers may also be used for the QPU 108. The particular type of multiplexer to be used can be selected based on the requirements of a given implementation, such as the depth of multiplexing required, and the associated noise introduced by the multiplexer and the optical loss induced by the optical components.

As noted above, the state factory 102 can also implement multiplexers to select the best optical signals received from the optical signal source 104 for further refinement and/or breeding in the refinery 106. In various configurations of the quantum computing system 100, multiplexing can be performed in the state factory 102, the QPUs 108, or both, depending on implementation constraints such as overhead, performance under noise, and hardware feasibility for example.

Since the refinery 106 generates probabilistic output states that are conditional on both the PNR measurements corresponding to the input states (from source 104) and on the homodyne measurements in the refinery 106, multiple refineries 106 can operate in parallel to provide resource states to the QPU. The multiplexers in the QPU 108 can then select, from shot-to-shot (i.e., for each clock cycle), the best of the output states to include in the cluster state stitch 230.

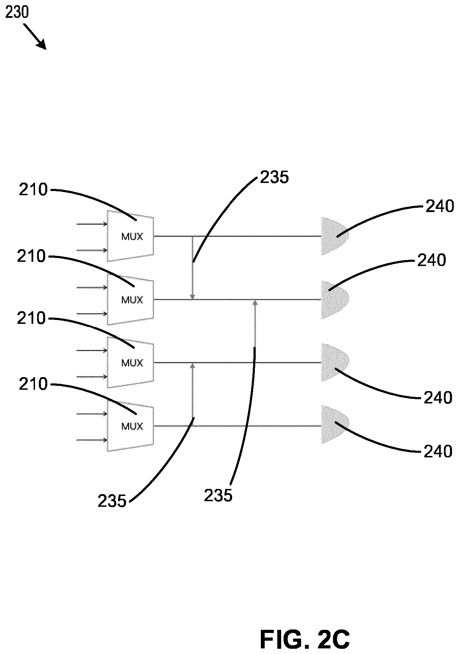

Referring now to FIG. 2C, shown therein is an example stitching circuit 230. The stitching circuit 230 shown in FIG. 2C is an example of a macronode stitch usable to generate a qubit graph state for the QPU 108. In the example illustrated, the desired set of optical signals are selected/routed by the multiplexers 210. The desired set of optical signals are then passed through static beamsplitters 235 to perform the graph state stitching. The qubits of the graph state are then provided to homodyne detectors 240 to be measured.

In the example illustrated, the macronode stitcher 230 receives optical signals defining four dumbbell halves (one from each potential input QPU multiplexer), wherein a "dumbbell" refers to a Bell pair. The received optical signals can be stitched using various different optical circuits, such as a linear cascade, binary tree, and a $2^n$ splitter for example.

The plurality of optical multiplexers 210 can be provided on the same chip as the other components of the QPU 108, such as the beamsplitters 235 and qubit measurement homodyne detectors 240. While this results in an increase to the size of the QPU chip, QPU chips tend to be smaller relative to the size of state factory chips. This may allow the size of state factory chips to be reduced (or at least not increased) while increasing the probability of using a desired resource state to generate the qubit graph state.

Adding optical multiplexers 210 to the QPU 108 implies that additional optical signals are provided as inputs to the QPU 108. This can require an increased number of state factory chips to generate the increased number of potential resource states to be selected by the QPU multiplexers.

Increasing the size of the QPU chips by adding optical multiplexers 210 allows the QPU controller to evaluate the quality of the incoming resource states based on homodyne measurement data from the refinery 106 and/or PNR measurement data from the source 104. The existing chip-fiber-chip couplings and delays can be used to select the higher quality resource states (e.g., GKP dumbbells) generated in the refinery 106 for use in generating the qubit graph state. A fiber is already present between the refineries 106 and QPU 108 for spatiotemporal routing, so the optical signals have already incurred loss from those optical elements.

While the presence of fast switches in the QPU 108 may complicate QPU architecture and introduce new losses, they can also provide a number of significant benefits to the quantum computing system 100. They may allow resource states from state factories 102 with higher levels of loss to become fault tolerant by selecting only the fraction of output states with sufficient quality in the presence of those higher levels of loss.

The QPU chip can also provide reconfigurability in beamsplitters, providing further flexibility for fault-tolerant computation. For example, logical qubit operations may be implemented via on-demand changes to physical gates (in addition to homodyne degrees of freedom). As another example, the local graph state topology may be modified in real-time. Furthermore, post-selection in quantum error correction (QEC) protocols such as magic state injection may be implemented.

Referring now to FIG. 3, shown therein is an example set of quantum processing units 108a-108e that can be used in a quantum computing system such as the example system 100 described herein above. The set of quantum processing units 108a-108e shown in FIG. 3 are intended to illustrate the relationship between the optical signals received by different quantum processing units in the computing system. It should be understood that the configuration shown in FIG. 3 is a simplified configuration with only a single stage of multiplexing and a 4-mode macronode graph (i.e., a qubit graph state where each vertex is a macronode, and each macronode is composed of 4 modes).

The example shown in FIG. 3 is a simplified example in which dumbbells from the state factory 102 are distributed to the QPUs 108, but instead of having one dumbbell per edge of the graph state, $M > 1$ dumbbells ($M = 4$ in the example shown) are distributed to each QPU per edge. Each QPU 108 receives $4M$ (for a 4-mode macronode graph) half dumbbells, i.e., $M$ dumbbells for each of the 4 modes that compose a macronode. As will be appreciated, this can be generalized in the case of macronodes composed of a different number of modes.

As shown in FIG. 3, a plurality of first optical signals 212 can be received at the input to a quantum processing unit 108. For example, QPU 108b receives four optical signals 212b1-212b1‴ at the input to optical multiplexer 210b1, four optical signals 212b2-212b2‴ at the input to optical multiplexer 210b2, four optical signals 212b3-212b3‴ at the input to optical multiplexer 210b3, and four optical signals 212b4-212b4‴ at the input to optical multiplexer 210b4.

Each first optical signal can be a portion of an entangled signal set. For each first optical signal, the corresponding entangled signal set can include that first optical signal and at least one additional optical signal. Continuing with the example of QPU 108b, the optical signal 212b4 is a portion of an entangled signal set that includes the additional optical signal 212a2‴.

Each additional optical signal in a given entangled signal set can be received by an additional optical multiplexer that is arranged at the input to an additional quantum processing unit. As shown in FIG. 3, the additional optical signal 212a2‴ is received by the optical multiplexer 108a.

In the example illustrated, each multiplexer 210 in each QPU 108 receives as input $M$ half dumbbells and selects the half dumbbell corresponding to the best dumbbell given a specific figure of merit (e.g., a signal quality metric) and discards the rest (or routes the remainder for other processing). An example process for determining the desired set of optical signals is described in further detail herein below with reference to steps 404 and 406 of method 400.

For an optical multiplexer implemented using a binary tree network, $M = 2^R$ where $R$ is the depth, or the number of stages, of multiplexing. As an example, the QPU 108 can receive $2^7$ potential resources states as inputs, separated into four sets of $2^5$ (for a 4-mode macronode). Each set of $2^5$ potential resources states can be provided as an input to a 32:1 optical multiplexer 210. Each multiplexer 210 can select (in coordination with the neighboring QPU 108) the best potential resource state to provide to the stitcher. This results in the four NSEW parts of the macronode being provided to the stitcher.

Each multiplexer 210 can select the best potential resource state to provide to the stitcher based on homodyne measurement data and/or PNR measurement data associated with the potential resource states received by the multiplexer 210.

As noted above, the selection of a desired resource state by a given multiplexer is performed in coordination with the multiplexers 210 on other QPUs 108. For each optical signal in the desired set of optical signals selected to be routed to the stitcher, each additional optical signal in the entangled signal set corresponding to that first optical signal is also identified as part of a desired set of additional optical signals for the additional quantum processing unit. For instance, as shown in FIG. 3, the optical signal 212b4 and the additional optical signal 212a2′′′ that are part of the same entangled signal set were both selected as desired optical signals by the multiplexers 210b4 and 210a2 on their respective QPUs 108b and 108a.

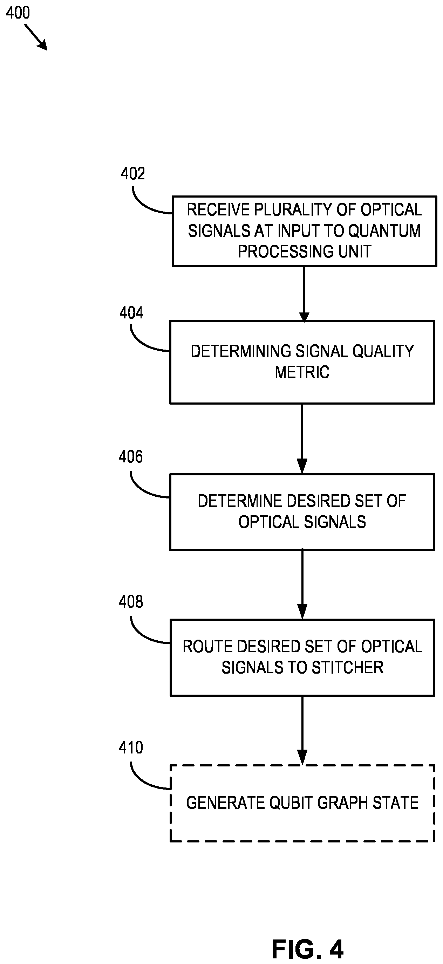

Referring now to FIG. 4, shown therein is an example method 400 for generating a qubit graph state. The method 400 can be implemented using a photonic quantum computing system, such as the example system 100 shown in FIG. 1.

At 402, a plurality of first optical signals can be received at the input to a quantum processing unit 108. The plurality of first optical signals can be received from a state factory 102.

Each first optical signal can be a portion of an entangled signal set. An entangled signal set generally refers to a combination of optical signals that were entangled during the process of generating quantum states to be provided to the quantum processing unit, e.g., by optical sources 104 and/or state refinery 106. For a given entangled signal set, each optical signal within that set can be provided to the input of a different quantum processing unit 108.

The plurality of first optical signals can be received by a plurality of first optical multiplexers arranged at the input to the first quantum processing unit. The optical multiplexers can be configured to selectively route the first optical signals to the optical stitching circuit(s) of the quantum processing unit.

For each first optical signal, the corresponding entangled signal set can include that first optical signal and at least one additional optical signal. Each additional optical signal in a given entangled signal set can be received by an additional optical multiplexer that is arranged at the input to an additional quantum processing unit.

The plurality of first optical signals can be received from a state factory 102 configured to generate GKP states. Some or all of the entangled signal sets received by the optical multiplexers at the input(s) to the QPU(s) can define a GKP Bell pair (i.e., a pair of GKP dumbbells). Alternatively or in addition, the entangled signal sets can include optical signals of other states of light that can be generated by the state factory 102 (including states that can be generated deterministically, such as squeezed states of light). This may allow low-quality GKP states to be discarded in favor of higher-quality signals that may be of a less desirable type of quantum state.

Optionally, at 404 one or more signal quality metrics can be determined for each first optical signal. The signal quality metrics can be defined to identify incoming optical signals in quantum states that are desirable for photonic quantum computing. This can allow the multiplexers to selectively route the desired optical signals for photonic quantum computing operations.

The signal quality metric for a given optical signal can be determined based on measurements of related optical signals. For example, a signal quality metric for a given optical signal can be determined based on a photon-number resolving measurement of a previously entangled mode that was previously entangled with a mode of that optical signal. That is, the signal quality metric for an optical signal that is input to the QPU can be determined based on a PNR measurement (e.g., from optical signal sources 104) of a mode of light that is different from the mode of the optical signal input to the QPU, but that was entangled with the mode of the optical signal input to the QPU in the state factory 102 (e.g., in the optical signal sources 104).

Alternatively or in addition, the signal quality metric for a given optical signal can be determined based on a homodyne measurement of a previously entangled mode that was previously entangled with a mode of that optical signal. That is, the signal quality metric for an optical signal that is input to the QPU can be determined based on a homodyne measurement (e.g., from refinery 106) of a mode of light that is different from the mode of the optical signal input to the QPU, but that was entangled with the mode of the optical signal input to the QPU in the state factory 102 (e.g., in the refinery 106).

An example of a signal quality metric that can be determined at step 404 is a symmetric effective squeezing metric. Symmetric effective squeezing can be used to evaluate incoming optical signals that are intended to be used to construct Bell pairs.

Constructing a GKP Bell pair from sensor states involves taking two sensor states (i.e., GKP states with peak spacing in $q$ of $\sqrt{2\pi}$ ), rotating one of them by $\pi/2$ (i.e., a phase rotation), and then passing both sensor states through a 50:50 beamsplitter. For a candidate GKP sensor state $\rho_o$ with asymmetric effective squeezing in $q$ and $p$ (after aligning the original lattice to the sensor state lattice), two copies of that sensor state can be passed through the GKP Bell pair generation circuit. One copy of the sensor state can then be measured and traced out, providing a partial trace. If the candidate GKP sensor states were high-quality sensor states (and therefore should have made a good GKP Bell pair), the remaining mode will approach the maximally mixed qubit state along the square lattice, which should be close to satisfying the GKP square lattice qubit stabilizers.

The stabilizer expectation values for the remaining half of the approximate Bell pair $\rho_1$ can then be determined from the homodyne measurements of the candidate sensor state $\rho_o$. For the square lattice qubit, the stabilizer operators are $\left( D(\sqrt{2\pi}), D(i\sqrt{2\pi}) \right)$:

$$
\begin{aligned}
\langle S_{\sqrt{2\pi}} \rangle_\rho &= \mathrm{Tr}_1\left[ \hat{D}_1\left(\sqrt{2\pi}\right)\rho_1 \right] \\
&= \mathrm{Tr}_1\left[ \hat{D}_1\left(\sqrt{2\pi}\right)\mathrm{Tr}_2\left[ U_{BS}R_2\left(\frac{\pi}{2}\right)\rho_o \otimes \rho_o R_2^\dagger\left(\frac{\pi}{2}\right)U_{BS}^\dagger \right] \right] \\
&= \mathrm{Tr}_{12}\left[ \hat{D}_1\left(\sqrt{2\pi}\right)U_{BS}R_2\left(\frac{\pi}{2}\right)\rho_o \otimes \rho_o R_2^\dagger\left(\frac{\pi}{2}\right)U_{BS}^\dagger \right] \\
&= \mathrm{Tr}_{12}\left[ R_2^\dagger\left(\frac{\pi}{2}\right)U_{BS}^\dagger\hat{D}_1\left(\sqrt{2\pi}\right)U_{BS}R_2\left(\frac{\pi}{2}\right)\rho_o \otimes \rho_o \right] \\
&= \mathrm{Tr}_{12}\left[ \hat{D}_1\left(\sqrt{\pi}\right)\hat{D}_2\left(i\sqrt{\pi}\right)\rho_o \otimes \rho_o \right] \\
&= \langle S_{\sqrt{\pi}} \rangle_{\rho_o}\langle S_{i\sqrt{\pi}} \rangle_{\rho_o},
\end{aligned}
$$

where $D$ is a displacement, $R$ is a phase rotation, and $U_{BS}$ is a beamsplitter unitary. Similarly:

$$
\langle S_{i\sqrt{2\pi}} \rangle_\rho = \langle S_{\sqrt{\pi}} \rangle_{\rho_o}\langle S_{i\sqrt{\pi}} \rangle_{\rho_o}.
$$

For the half of the approximate Bell pair, the stabilizer expectation values in $q$ and $p$ are equal to each other by construction. These stabilizer expectation values can be computed by taking the product of the sensor state stabilizer expectation values of the approximate sensor state used to construct the approximate Bell pair. The symmetric effective squeezing can then be defined as the effective squeezing of one half of the Bell pair with respect to the square lattice:

$$
\sigma_{\mathrm{sym}}^2 = \frac{1}{2\pi}\log\left( \frac{1}{\left|\langle S_{\sqrt{\pi}} \rangle_{U_G\rho U_G^\dagger}\right|^2 \left|\langle S_{i\sqrt{\pi}} \rangle_{U_G\rho U_G^\dagger}\right|^2} \right).
$$

For example, to compare a first sensor state with 10 dB of effective squeezing in both quadratures with a second sensor state that has 9 dB in $q$ and 11 dB in $p$ of effective squeezing, we can use their respective symmetric effective squeezing values. The first sensor state corresponds to $\langle S_{\sqrt{\pi}} \rangle = \langle S_{i\sqrt{\pi}} \rangle \approx 0.854$, which corresponds to a symmetric effective squeezing of 10 dB. The second sensor state corresponds to $\langle S_{\sqrt{\pi}} \rangle \approx 0.882, \langle S_{i\sqrt{\pi}} \rangle \approx 0.821$, which corresponds to a symmetric effective squeezing of 9.88 dB. Accordingly, the first sensor state can be identified as being of a higher quality than the second sensor state.

At 406, a desired set of first optical signals can be determined from the plurality of first optical signals received at 402. The desired set of first optical signals can be determined based on the properties of the first optical signals received at 402.

Optionally, the desired set of first optical signals can be identified using the at least one signal quality metric determined for each first optical signal at 404. The desired set of optical signals can be selected to include the highest quality optical signals and/or the highest quality entangled signal sets (e.g., as determined by the signal quality metric(s) from step 404).

The routing of a particular optical signal that is part of an entangled signal set is related to the routing of the other optical signals that are also part of that entangled signal set. Accordingly, for each first optical signal in the desired set of first optical signals, each additional optical signal in the entangled signal set corresponding to that first optical signal can also be identified as part of a desired set of additional optical signals for the additional quantum processing unit. Referring to FIG. 3 for example, first optical signal 212a2‴ was identified as being in the desired set of first optical signals for QPU 108a and the additional optical signal 212b4 (in the entangled signal set with first optical signal 212a2‴) was also identified as part of the desired set of additional optical signals for the additional quantum processing unit 108b.

As noted above at step 402, each first optical signal can be a portion of an entangled signal set. The entangled signal set is one of a plurality of entangled signal sets. Accordingly, a plurality of set quality metrics can be determined for the plurality of entangled signal sets. A corresponding set quality metric can be determined for each entangled signal set in the plurality of entangled signal sets. The desired set of first optical signals can be determined based on the plurality of set quality metrics. Accordingly, evaluating the set quality metrics for a plurality of different entangled signal sets allows for the desired entangled signal sets (and the optical signals contained therein) to be selected at 406.

As noted above, the quantum computing system 100 can be arranged to route GKP Bell pairs to the quantum processing unit 108. Accordingly, the desired set of first optical signals can be determined at 406 to include at least one entangled signal set defining a Gottesman-Kitaev-Preskill (GKP) Bell pair. Optionally, the desired set of first optical signals can be determined at 406 such that each entangled signal set defines a Gottesman-Kitaev-Preskill (GKP) Bell pair.

Alternatively, however, the GKP states at the input to a QPU may not be of high quality. Accordingly, the desired set of first optical signals can be determined to omit any GKP states in the plurality of first optical signals having an associated state quality below a desired signal quality threshold. For example, deterministically generated states may be used in place of low-quality GKP states.

Optionally, the desired set of first optical signals can be determined to include at least one first optical signal comprising a squeezed optical state. For example, if the state factory 102 does not generate a sufficient number of satisfactory GKP states, the desired set of optical signals can be determined to include a squeezed state in lieu of a GKP state. The squeezed optical state can be used in lieu of a GKP state, e.g., as part of an entangled signal set that includes a GKP state entangled with a squeezed state instead of two GKP states entangled.

Optionally, the desired set of first optical signals can be determined to include at least one entangled signal set defining a squeezed state pair. For example, if a GKP dumbbell from the state factory 102 is not of a satisfactory quality, the entire GKP dumbbell (i.e., all of the optical signals in the entangled signal set) can be replaced with a squeezed-state dumbbell (i.e., the entangled signal set would include only squeezed states instead of GKP states).

Optionally, the QPU can consider squeezed states included in an entangled signal set to be errors that can be handled using a quantum error correcting code.

At 408, the desired set of optical signals from 406 can be routed to the QPU stitcher. The desired set of optical signals can then be used to generate a qubit graph state to perform quantum computation.

Optionally, the non-selected optical signals (e.g., lower-quality optical signals or less desirable optical states) may be discarded. Alternatively or in addition, some or all of the non-selected optical signals can be routed for other measurements, e.g., to provide monitoring data on the quantum computing hardware (e.g., indicating whether the system is properly calibrated, operating stably, etc.).

At 410, a qubit graph state can be generated by generating a first macronode graph from the desired set of first optical signals determined at 406. The desired set of first optical signals can be entangled to generate the first macronode graph. For example, the macronode graph can be entangled using the stitcher 230 shown in FIG. 2C described herein above.

The qubit graph state generated by the QPU 108 can then be used for quantum computation. The qubits of the graph state can be measured using homodyne detectors. These measurements can be used to perform measurement-based quantum computation, and the measurement data can be decoded to inform subsequent iterations of measurements and to determine the results of the computation.

The inventors conducted simulations of example configurations of the quantum computing system described herein. In the simulations, the state factory was implemented using three-mode GBS sources (input squeezing factors of 15 dB, 15 dB, and 13 dB) and a breeding circuit of depth 10. The loss between the GBS sources and the PNR detectors was 1%, and the loss between the GBS sources and refinery was 1%.

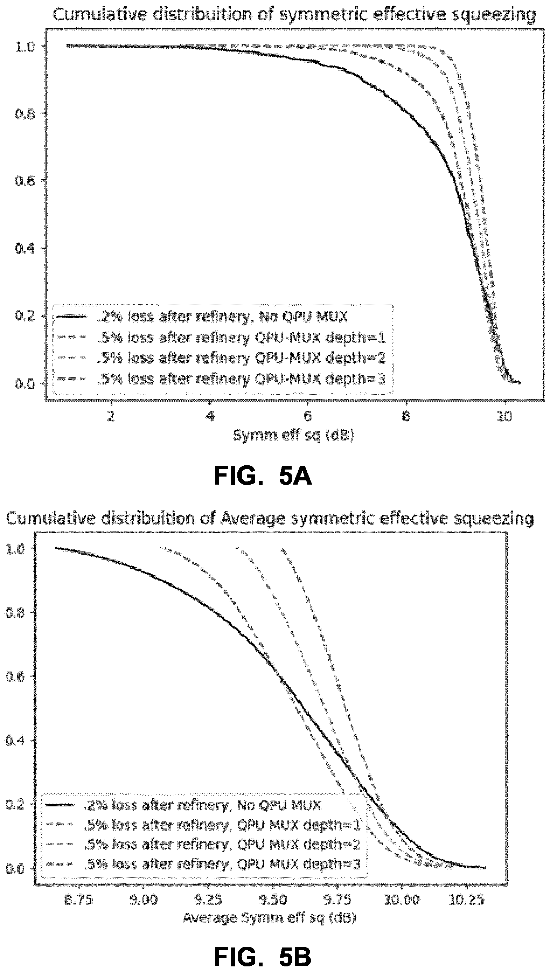

Referring now to FIG. 5A, shown therein is an example plot of the cumulative distribution of symmetric effective squeezing of the optical states received at the homodyne detectors of a quantum processing unit for various example simulated configurations of a quantum processing unit with and without optical multiplexers. The configurations simulated include a QPU with no multiplexers, a QPU with one stage of optical multiplexers, a QPU with two stages of optical multiplexers, and a QPU with three stages of optical multiplexers. The optical states received by the homodyne detectors of the QPU with no multiplexers underwent a 0.2% loss from the state factory to the homodyne detectors at QPU while the optical states received by the homodyne detectors of the QPUs with multiplexers underwent a 0.5% loss from the state factory to the homodyne detectors at QPU. As can be seen from FIG. 5A, a significant improvement to the distribution of symmetric effective squeezing can be seen with each additional round of MUX in the QPU.

Referring now to FIG. 5B, shown therein is an example plot of the cumulative distribution of symmetric effective squeezing of the average optical state received at the homodyne detectors of the same example quantum processing unit configurations simulated in FIG. 5A. Here again, the symmetric effective squeezing of the average optical state over the full distribution of states shows an improvement for each additional stage of QPU multiplexing (albeit with some additional loss).

While the above description provides examples of one or more processes or apparatuses or systems, it will be appreciated that other processes or apparatuses or systems may be within the scope of the accompanying claims.

It will be understood that the embodiments described in this disclosure and the module, routine, process, thread, or other software component implementing the described methods/processes/frameworks may be realized using standard computer programming techniques and languages. The present application is not limited to particular processors, computer languages, computer programming conventions, data structures, and/or other such implementation details. Those skilled in the art will recognize that the described methods/processes may be implemented as a part of computer-executable code stored in volatile or non-volatile memory, as part of an application-specific integrated chip (ASIC), etc.

As will be apparent to a person of skill in the art, certain adaptations and modifications of the described methods/processes/frameworks can be made, and the above discussed embodiments should be considered to be illustrative and not restrictive.

To the extent any amendments, characterizations, or other assertions previously made (in this or in any related patent applications or patents, including any parent, sibling, or child) with respect to any art, prior or otherwise, could be construed as a disclaimer of any subject matter supported by the present disclosure of this application, Applicant hereby rescinds and retracts such disclaimer. Applicant also respectfully submits that any prior art previously considered in any related patent applications or patents, including any parent, sibling, or child, may need to be re-visited.

**Claims**

1. A method comprising:

    receiving a plurality of first optical signals at a plurality of first optical multiplexers arranged at the input to a first quantum processing unit, wherein each first optical signal is a portion of an entangled signal set; and generating a first qubit graph state by:

        determining a desired set of first optical signals from the plurality of first optical signals; and
        generating a first macronode graph by entangling the desired set of first optical signals.

2. The method of claim 1, wherein the desired set of first optical signals is determined using at least one signal quality metric for each first optical signal; and the at least one signal quality metric for each first optical signal is determined based on at least one of:

    a homodyne measurement of a previously entangled mode that was previously entangled with a first mode of that first optical signal; or
    a photon-number resolving measurement of a previously entangled mode that was previously entangled with a first mode of that first optical signal.

3. The method of any one of claims 1 and 2, wherein the entangled signal set is one of a plurality of entangled signal sets and selecting the desired set of first optical signals comprises determining a plurality of set quality metrics by, for each entangled signal set in the plurality of entangled signal sets, determining a corresponding set quality metric and selecting the desired set of first optical signals based on the plurality of set quality metrics; and
    optionally, each entangled signal set defines a Gottesman-Kitaev-Preskill (GKP) Bell pair.

4. The method of any one of claims 1 to 3, wherein the plurality of first optical multiplexers and the first quantum processing unit are provided on the same chip; and/or
    each optical multiplexer comprises a plurality of fast switches arranged into a binary tree network.

5. The method of any one of claims 1 to 4, wherein:

    for each first optical signal, the corresponding entangled signal set comprises that first optical signal and at least one additional optical signal; and

each additional optical signal in a given entangled signal set is received by an additional optical multiplexer that is arranged at the input to an additional quantum processing unit.

6. The method of any one of claims 1 to 5, wherein the plurality of first optical signals are received from a GKP state factory; and/or

determining the desired set of first optical signals comprises omitting any GKP states in the plurality of first optical signals having an associated state quality below a desired signal quality threshold.

7. The method of any one of claims 1 to 6, further comprising measuring one or more qubits in the first qubit graph state using a homodyne detector.

8. A system comprising:

a plurality of first optical multiplexers arranged at the input to a first quantum processing unit to receive a plurality of first optical signals, wherein each first optical signal is a portion of an entangled signal set; and

a controller, wherein the controller is configured to:

determine a desired set of first optical signals from the plurality of first optical signals; and

control the operation of the plurality of first optical multiplexers to route the desired set of first optical signals to a first optical stitcher configured to entangle the desired set of first optical signals into a first macronode graph to generate a first qubit graph state.

9. The system of claim 8, wherein the controller is configured to determine the desired set of first optical signals using at least one signal quality metric for each first optical signal and to determine the at least one signal quality metric for each first optical signal based on at least one of:

a homodyne measurement of a previously entangled mode that was previously entangled with a first mode of that first optical signal; or

a photon-number resolving measurement of a previously entangled mode that was previously entangled with a first mode of that first optical signal.

10. The system of any one of claims 8 and 9, wherein the entangled signal set is one of a plurality of entangled signal sets and the controller is configured to determine the desired set of first optical signals by determining a plurality of set quality metrics by, for each entangled signal set of the plurality of entangled signal sets, determining a corresponding set quality metric and determining the desired set of first optical signals based on the plurality of set quality metrics; and optionally, each entangled signal set defines a Gottesman-Kitaev-Preskill (GKP) Bell pair.

11. The system of any one of claims 8 to 10, wherein the plurality of first optical multiplexers and the first quantum processing unit are provided on the same chip; and/or

each optical multiplexer comprises a plurality of fast switches arranged into a binary tree network.

12. The system of any one of claims 8 to 11, further comprising:

at least one additional quantum processing unit; and

for each additional quantum processing unit, a plurality of additional optical multiplexers arranged at an input to that additional quantum processing unit;

wherein

for each first optical signal, the corresponding entangled signal set comprises that first optical signal and at least one additional optical signal; and

each additional optical signal in a given entangled signal set is received by one of the additional optical multiplexers arranged at the input to one of the additional quantum processing units.

13. The system of any one of claims 8 to 12 further comprising a GKP state factory optically coupled to the plurality of first optical multiplexers, wherein the plurality of first optical signals are received from the GKP state factory.

14. The system of any one of claims 8 to 13, wherein the controller is operable to determine the desired set of first optical signals to omit any GKP states in the plurality of first optical signals having an associated state quality below a desired signal quality threshold.

15. The system of any one of claims 8 to 14, further comprising one or more QPU homodyne detectors; and the controller is configured to measure one or more qubits in the first qubit graph state using the one or more QPU homodyne detectors.

FIG. 1

FIG. 2A

FIG. 2B

230

210

MUX

210

MUX

210

MUX

210

MUX

235

240

240

240

240

235

235

**FIG. 2C**

FIG. 3

400

402

RECEIVE PLURALITY OF OPTICAL
SIGNALS AT INPUT TO QUANTUM
PROCESSING UNIT

404

DETERMINING SIGNAL QUALITY
METRIC

406

DETERMINE DESIRED SET OF
OPTICAL SIGNALS

408

ROUTE DESIRED SET OF OPTICAL
SIGNALS TO STITCHER

410

GENERATE QUBIT GRAPH STATE

**FIG. 4**

## Cumulative distribuition of symmetric effective squeezing

Legend:
- .2% loss after refinery, No QPU MUX
- .5% loss after refinery QPU-MUX depth=1
- .5% loss after refinery QPU-MUX depth=2
- .5% loss after refinery QPU-MUX depth=3

Symm eff sq (dB)

## FIG. 5A

## Cumulative distribuition of Average symmetric effective squeezing

Legend:
- .2% loss after refinery, No QPU MUX
- .5% loss after refinery, QPU MUX depth=1
- .5% loss after refinery, QPU MUX depth=2
- .5% loss after refinery, QPU MUX depth=3

Average Symm eff sq (dB)

## FIG. 5B

Europäisches
Patentamt

European
Patent Office

Office européen
des brevets

# EUROPEAN SEARCH REPORT

**Application Number**

EP 25 17 9750

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/281499 A1 (BOURASSA JOSEPH ELI [CA] ET AL) 7 September 2023 (2023-09-07) * figures 1,2A,2C,12 * * [0038],[0025],[0040],[0043],[0048],[0050],[0053],[0064]-[0065],[0090],[0095],[0167] * ----- | 1-15 | INV. G06N10/40 G06N10/70 |
| A | SARA BARTOLUCCI ET AL: "Fusion-based quantum computation", ARXIV.ORG, CORNELL UNIVERSITY LIBRARY, 201 OLIN LIBRARY CORNELL UNIVERSITY ITHACA, NY 14853, 22 January 2021 (2021-01-22), XP081866019, * Fig. 1 b) * ----- | 1,8 | |
| A | GALAN MOODY ET AL: "Roadmap on Integrated Quantum Photonics", ARXIV.ORG, CORNELL UNIVERSITY LIBRARY, 201 OLIN LIBRARY CORNELL UNIVERSITY ITHACA, NY 14853, 5 February 2021 (2021-02-05), XP081876074, * the whole document * ----- | 1-15 | TECHNICAL FIELDS SEARCHED (IPC) G06N H04B B82Y |

The present search report has been drawn up for all claims

| Place of search | Date of completion of the search | Examiner |
|---|---|---|
| The Hague | 17 September 2025 | Veynachter, Alexis |

EPO FORM 1503 03.82 (P04C01)

## ANNEX TO THE EUROPEAN SEARCH REPORT
## ON EUROPEAN PATENT APPLICATION NO.

EP 25 17 9750

This annex lists the patent family members relating to the patent documents cited in the above-mentioned European search report.
The members are as contained in the European Patent Office EDP file on
The European Patent Office is in no way liable for these particulars which are merely given for the purpose of information.

17-09-2025

| Patent document cited in search report | Publication date | Patent family member(s) | | Publication date |
|---|---|---|---|---|
| US 2023281499 A1 | 07-09-2023 | AU | 2021352452 A1 | 18-05-2023 |
| | | CA | 3195906 A1 | 07-04-2022 |
| | | CN | 116507583 A | 28-07-2023 |
| | | EP | 4222660 A1 | 09-08-2023 |
| | | JP | 2023544543 A | 24-10-2023 |
| | | US | 2022101168 A1 | 31-03-2022 |
| | | US | 2023281499 A1 | 07-09-2023 |
| | | WO | 2022067431 A1 | 07-04-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **J.E. BOURASSA et al.** Blueprint for a scalable photonic fault-tolerant quantum computer. *Quantum*, 2021, vol. 5, 392